# EUROPÄISCHE PATENTSCHRIFT

(11) **EP 2 873 514 B1**
(45) Veröffentlichungstag und Bekanntmachung des Hinweises auf die Patenterteilung: **25.05.2016**
(21) Anmeldenummer: 14182575.2
(22) Anmeldetag: 28.08.2014
(51) Int. Cl.: B29C 67/00, B29C 33/30

(54) **Verfahren und Vorrichtung zum Erzeugen eines dreidimensionalen Objekts**
Method and device for generating a three-dimensional object
Procédé et dispositif destinés à produire un objet tridimensionnel

(30) Priorität: 19.11.2013 DE 102013223514
(43) Veröffentlichungstag der Anmeldung: 20.05.2015
(73) Patentinhaber: Hochschule für angewandte Wissenschaften München, 80335 München (DE)
(72) Erfinder: Haller, Dieter, Prof. Dr., 82041 Oberhaching (DE); Georgoulas, Matthaios, 85055 Ingolstadt (DE)
(74) Vertreter: Hoefer & Partner Patentanwälte mbB

(56) Entgegenhaltungen:
- EP-A1- 2 502 730
- US-A1- 2002 167 101

## Beschreibung

Die vorliegende Erfindung betrifft ein Verfahren zum Herstellen eines dreidimensionalen Objekts. Weiterhin betrifft die Erfindung eine Vorrichtung, mit der ein derartiges Verfahren durchführbar ist.

Bei zahlreichen Herstellungsprozessen, wie etwa beim Thermoformen von Kunststoffen, beim Kunststoff-Spritzgießen, bei Schäumprozessen zur Verarbeitung von Polyurethanschäumen, beim Tiefziehen oder beim Blechumformen, werden Formen benötigt, die gemäß dem Stand der Technik in einem Fräsprozess gefertigt werden.

Fräsprozesse dienen gemäß dem Stand der Technik hauptsächlich zur Herstellung von Formwerkzeugen und sind mit einem hohen Materialeinsatz und Ressourcenverbrauch verbunden. Dies stellt eine beträchtliche ökologische Last dar. Angesichts des Klimawandels und der Notwendigkeit zur Energieeinsparung und Ressourcenschonung ist aus dem Stand der Technik seit langem ein Ziel bekannt, wiederverwendbare Werkzeuge einzusetzen.

Der Stand der Technik kennt, beispielsweise in der EP 2 502 730 A1, wiederverwendbare Formen in Form von Objekten, die eine Vielzahl von Stiften aufweisen. Diese Stifte sind entlang ihrer Längsachse verschiebbar und können daher Konturen näherungsweise abbilden. Nachteilig dabei ist, dass auch bei einer sehr hohen Anzahl von Stiften stets die Problematik bestehen bleibt, dass die Oberfläche der Form bzw. der Gesamtheit aller Stifte eine Treppenstruktur aufweist. Eine beliebig geformte Oberfläche mit einer hohen Oberflächengüte ist somit nicht herstellbar. Ein weiteres Problem besteht darin, dass bei sehr vielen Stiften die Kosten für einen Antrieb der Stifte ansteigen und/oder die Zeit für deren Positionierung zunimmt.

Es ist Aufgabe der Erfindung, ein Verfahren zum Herstellen eines dreidimensionalen Objekts, insbesondere einer Form, bereitzustellen, das bei einfacher und kostengünstiger Anwendbarkeit eine schnelle und kostengünstige Herstellung eines Objekts ermöglicht. Es ist weiterhin Aufgabe der Erfindung, eine Vorrichtung bereitzustellen, mit der das oben genannte Verfahren einfach und kostengünstig durchführbar ist.

Die Lösung dieser Aufgabe erfolgt durch die Merkmale des Anspruchs 1. Daher wird die Aufgabe gelöst durch ein Verfahren zum Herstellen eines dreidimensionalen Objekts, insbesondere einer Form, das die folgenden Schritte umfasst: Zunächst wird eine Vielzahl von Stempeln bereitgestellt, die eine Längsachse aufweisen und die entlang der Längsachse verschiebbar sind. Vorteilhafterweise sind die Stempel parallel zueinander angeordnet und weisen stets denselben Abstand zueinander auf. Weiterhin ist vorteilhafter Weise vorgesehen, dass die Stempel derart bereitgestellt werden, dass keine Lücke zwischen benachbarten Stempeln entsteht. Somit bilden die Oberflächen der Stempel vorteilhafterweise, wenn die Stempel entlang ihrer Längsachse nicht verschoben wurden, eine nahezu durchgängige Ebene. Durch Verschieben der Stempel entlang der Längsachse ist eine Oberflächenkontur erzeugbar. Daher ist der nächste Schritt des erfindungsgemäßen Verfahrens das Formen einer Stempelkontur mittels der Stempel durch Verschieben der einzelnen Stempel entlang ihrer Längsachse. Die Stempelkontur ist jedoch stets eine diskrete Kontur, was bedeutet, dass stets eine Treppenstruktur vorhanden ist. Somit lassen sich vordefinierte Konturen, wie insbesondere die Kontur des herzustellenden dreidimensionalen Objekts, nur näherungsweise abbilden. Aus diesem Grund wird in einem nächsten Schritt ein Restvolumen zwischen der Stempelkontur und einer Kontur des dreidimensionalen Objekts bestimmt. Das Restvolumen entspricht daher der Abbildungsungenauigkeit der Stempelkontur durch die Treppenstruktur. Somit ist insbesondere vorgesehen, dass die Stempelkontur lediglich eine grobe Abbildung der Kontur des Objekts ist, während das Restvolumen eine feine Abbildung der Kontur des Objekts darstellt. Schließlich findet ein Aufbringen eines Füllmaterials auf eine Oberfläche der Stempel statt. Auf diese Weise wird das Restvolumen zumindest teilweise mit Füllmaterial aufgefüllt. Bevorzugt wird das Restvolumen vollständig mit dem Füllmaterial aufgefüllt. Auf diese Weise entsteht ein dreidimensionales Objekt, insbesondere eine dreidimensionale Form, das einen Unterbau aus Stempeln und einen Überbau aus dem Füllmaterial umfasst. Durch die Kombination dieser beiden Bestandteile ist eine vorgegebene Kontur sehr gut abbildbar.

Die Unteransprüche haben bevorzugte Weiterbildungen der Erfindung zum Inhalt.

Vorteilhafterweise geschieht das Aufbringen des Füllmaterials auf die Oberfläche der Stempel schichtweise. Hierzu werden bevorzugt Techniken des 3D-Drucks oder des Rapid-Prototyping-Verfahrens angewendet. Insbesondere umfassen diese Techniken die Stereolithographie, das Laser-Sintern, das Laminate-Object-Modelling, das Fused-Deposition-Modelling, oder sonstige bekannte Verfahren, bei denen Material schichtweise aufgetragen wird.

Vorteilhafterweise wird für jeden Stempel ein aufzubringendes Volumen bestimmt. Das aufzubringende Volumen entspricht dem Teilbereich des Restvolumens, der sich über dem Stempel befindet. Somit muss auf jeden Stempel das entsprechende aufzubringende Volumen aufgebracht werden, um das Restvolumen, zumindest teilweise, aufzufüllen. Dies ist insbesondere dann vorteilhaft, wenn das Füllmaterial schichtweise auf die Stempel aufgetragen wird. In diesem Fall entspricht das aufzubringende Volumen der Anzahl an Schichten aus Füllmaterial, die auf den Stempel aufgebracht werden müssen. Somit ist ein einfaches und kostengünstiges Herstellen des dreidimensionalen Objekts möglich.

Außerdem ist bevorzugt vorgesehen, dass für jeden Stempel eine Endposition bestimmt ist. In der Endposition bilden die Stempel die zuvor beschriebene Stempelkontur. Das Aufbringen des Füllmaterials wird dann mit den folgenden Schritten ausgeführt: Zunächst werden die Stempel in eine Grundposition verschoben, in der die Oberflächen der Stempel eine Ebene bilden. Dies erleichtert das Aufbringen des Füllmaterials, da das Füllmaterial lediglich in einer einzigen Ebene aufgebracht werden muss. Somit muss nicht in unterschiedlichen Ebenen, wie dies bei unterschiedlich verfahrenen Stempeln nötig wäre, gearbeitet werden. In einem nächsten Schritt wird überprüft, ob mindestens einer der Stempel seine Endposition erreicht hat. Da die Stempel in die Grundposition verfahren wurden, wird daher insbesondere festgestellt, ob die Endposition mindestens eines der Stempel die Grundposition ist. Anschließend wird in einem nächsten Schritt das Füllmaterial auf zumindest einen Teil der Stempel aufgebracht. Das Aufbringen erfolgt dabei auf zumindest einen Teil der Stempel, für die das aufzubringende Volumen noch größer als Null ist. Sobald das Füllmaterial aufgetragen wurde, wird ein weiterer Schritt ausgeführt, in dem zumindest ein Teil derjenigen Stempel verschoben wird, die keine Endposition erreicht haben. Im weiteren Verlauf werden nun die Schritte des Überprüfens der Endposition, des Aufbringens des Füllmaterials und des Verschiebens der Stempel so lange wiederholt, bis alle Stempel die Endposition erreicht haben. Mit diesen Schritten ist das dreidimensionale Objekt einfach und kostengünstig fertigbar, da bevorzugt bekannte Techniken aus 3D-Druckverfahren anwendbar sind. Dazu stellt das erfindungsgemäße Verfahren gemäß der besonderen Ausführungsform sicher, dass das Füllmaterial stets nur innerhalb einer Ebene aufgebracht werden muss.

Insbesondere erfolgt das Verschieben der Stempel derart, dass die Oberflächen der verschobenen Stempel auf einem höheren Niveau liegen als die Oberflächen derjenigen Stempel, die bereits eine Endposition erreicht haben. In diesem Fall wird das Füllmaterial lediglich auf diejenigen Stempel aufgebracht, die bereits eine Endposition erreicht haben. Ebenso werden sämtliche Stempel verschoben, die sich noch nicht in ihrer Endposition befinden. Alternativ dazu ist bevorzugt vorgesehen, dass die Oberflächen der verschobenen Stempel auf einem niedrigeren Niveau liegen als die Oberflächen derjenigen Stempel, die nicht verschoben wurden. In diesem Fall wird das Füllmaterial auf diejenigen Stempel aufgebracht, die einen größten Verschiebungsweg aller Stempel bis zum Erreichen einer Endposition aufweisen. Das Absenken erfolgt bevorzugt lediglich bei denjenigen Stempeln, die bereits mit einem Füllmaterial versehen wurden.

Der Weg der Verschiebung entspricht bevorzugt einer Schichtdicke des zuvor aufgetragenen Füllmaterials. Somit bilden die Oberflächen der verschobenen Stempel und die Oberflächen des im vorangegangenen Schritt aufgetragenen Füllmaterials eine neue Ebene.

Bevorzugt wird das Füllmaterial mit einem Druckkopf aufgebracht. Der Druckkopf ist vorteilhafterweise mit den Stempeln entlang deren Längsachse verschiebbar. Somit wird bei Verschiebung der Stempel der Druckkopf vorteilhafterweise um denselben Verfahrensweg verschoben, so dass der relative Abstand zwischen Druckkopf und Oberfläche der Stempel konstant ist. Eine Ansteuerung des Druckkopfes ist daher insbesondere sehr einfach möglich, da der Abstand zu der Ebene, auf die das Füllmaterial aufzubringen ist, relativ zum Druckkopf stets konstant ist. Alternativ dazu wird der Druckkopf bevorzugt auf derselben Höhe belassen, während einzelne Stempel abgesenkt werden.

Alternativ wird das erfindungsgemäße Verfahren derart ausgeführt, dass das Restvolumen zumindest teilweise durch das Füllmaterial als separater Körper aus Füllmaterial aufgefüllt wird. Hierzu wird insbesondere auf Methoden des Rapid Prototyping zurückgegriffen, um den separaten Körper aus Füllmaterial zu fertigen. Besonders bevorzugt wird der separate Körper mittels 3D-Druck gefertigt. Hierzu wird vorteilhafterweise zusätzlich eine Stützkonstruktion gefertigt, die der Stempelkontur entspricht. Sobald der separate Körper fertiggestellt ist, wird dieser auf die Stempelkontur der Stempel aufgesetzt, so dass das Restvolumen durch den separaten Körper zumindest teilweise aufgefüllt ist.

Weiterhin betrifft die Erfindung eine Vorrichtung, die insbesondere zum Durchführen des zuvor beschriebenen Verfahrens einsetzbar ist. Dazu umfasst die Vorrichtung zumindest eine erste Komponente und zumindest eine zweite Komponente. Die erste Komponente umfasst eine Vielzahl von Stempeln, die jeweils eine Längsachse aufweisen und an einer Grundplatte angebracht sind. Weiterhin sind die Stempel entlang ihrer Längsachse verschiebbar. Die Anordnung der Stempel ist insbesondere identisch wie in den zuvor beschriebenen Verfahren. Die zweite Komponente umfasst eine Vielzahl von Stiften, wobei jeder Stift einem Stempel zugeordnet ist. Somit ist die Längsachse der Stempel insbesondere auch eine Längsachse der Stifte. Die Stifte sind entlang der Längsachsen verschiebbar. Weiterhin umfasst die zweite Komponente eine feste Platte sowie eine bewegliche Platte, wobei die Stifte insbesondere an der festen Platte und an der beweglichen Platte angebracht sind. Die erste Komponente ist bevorzugt von der zweiten Komponente trennbar. Falls die erste Komponente mit der zweiten Komponente verbunden ist, ist erfindungsgemäß vorgesehen, dass die Stempel durch die ihnen zugeordneten Stifte verschiebbar sind. Die Stifte wiederum sind durch die bewegliche Platte verschiebbar. Die Stempel sind vorteilhafterweise hülsenförmig ausgebildet. Insbesondere sind die Stempel und/oder Hülsen Rundprofile oder Vierkantprofile. Somit ist eine Gewichtsersparnis vorhanden, die dennoch ein maximales Widerstandsmoment gegen Druckbelastungen erlaubt.

Die Vorrichtung ist insbesondere derart ausgestaltet, dass die Grundplatte erste Klemmvorrichtungen aufweist, mit denen die Stempel unabhängig voneinander an der Grundplatte festklemmbar sind. Alternativ oder zusätzlich ist vorgesehen, dass die feste Platte zweite Klemmvorrichtungen aufweist, mit denen die Stifte unabhängig voneinander an der festen Platte festklemmbar sind. Schließlich ist alternativ oder zusätzlich vorteilhaft vorgesehen, dass die bewegliche Platte dritte Klemmvorrichtungen aufweist, mit denen die Stifte unabhängig voneinander an der beweglichen Platte festklemmbar sind. Durch das Vorsehen von Klemmvorrichtungen ist insbesondere ebenso vorgesehen, dass die Stempel die Grundplatte durchstoßen und/oder die Stifte die feste Platte und/oder die bewegliche Platte durchstoßen. Auf diese Weise sind die Stempel und/oder die Stifte vorteilhafterweise senkrecht zu der Grundplatte und/oder der beweglichen Platte und/oder der festen Platte bewegbar. Durch die jeweilige Klemmvorrichtung ist eine derartige Bewegung verhinderbar. Vorteilhafterweise sind die Klemmvorrichtungen wechselweise auf unterschiedlichen Seiten der Grundplatte und/oder der festen Platte und/oder der beweglichen Platte angebracht, um einen Abstand zwischen den Stempeln und/oder den Stiften zu minimieren.

Die ersten Klemmvorrichtungen und/oder die zweiten Klemmvorrichtungen und/oder die dritten Klemmvorrichtungen sind bevorzugt magnetische Klemmvorrichtungen. Dazu ist besonders bevorzugt vorgesehen, dass die Klemmvorrichtungen stabile Klemmvorrichtungen sind, so dass keine Energie von außen zuzuführen ist, um die Klemmvorrichtungen in einem geklemmten oder einem losen Zustand zu halten. Daher ist lediglich ein Energieimpuls zum Umschalten zwischen einem geklemmten Zustand und einem ungeklemmten Zustand notwendig.

Weiterhin ist bevorzugt vorgesehen, dass eine Verschiebung der Stifte ein Festklemmen der Stifte an der beweglichen Platte umfasst. Somit ist eine Bewegung der beweglichen Platte auf die Stifte übertragbar. Durch gezieltes Festklemmen einzelner Stifte sind somit gezielt einzelne Stifte bewegbar. Alternativ oder zusätzlich umfasst ein Fixieren der Stifte bevorzugt ein Festklemmen der Stifte an der festen Platte. Vorteilhafterweise wird dazu eine Festklemmung an der beweglichen Platte gelöst. Somit ist ein Stift vorteilhafterweise an der festen Platte festgeklemmt, während die bewegliche Platte weiterhin beweglich bleibt, insbesondere um andere Stifte zu verschieben. Da die Stempel vorteilhafterweise lediglich von den Stiften verschoben werden, ist hier die erste Klemmvorrichtung ausreichend, um die Stempel bei Bedarf an der Grundplatte festzuklemmen. In diesem Fall sind die Stempel fixiert, insbesondere um die Stempelkontur abzubilden.

Schließlich ist vorteilhafterweise vorgesehen, dass die ersten Klemmvorrichtungen und/oder die zweiten Klemmvorrichtungen und/oder die dritten Klemmvorrichtungen eine Klemmscheibe sowie einen Klemmzylinder aufweisen. Die Klemmscheibe erstreckt sich vorteilhafterweise radial um den festzuklemmenden Stift oder um den festzuklemmenden Stempel. Der Klemmzylinder ist vorteilhafterweise entlang der Längsachse der Stifte und des Stempels von einer ersten Position in eine zweite Position verschiebbar. In der ersten Position wirkt der Klemmzylinder auf die Klemmscheibe derart ein, dass ein Festklemmen des Stifts oder des Stempels entsteht. In der zweiten Position sind Klemmzylinder und Klemmscheibe bevorzugt getrennt. Somit findet auch kein Festklemmen statt. Das Einwirken von Klemmzylinder auf Klemmschiebe wird vorteilhafterweise dadurch erreicht, dass sowohl Klemmscheibe als auch Klemmzylinder über einen korrespondierenden konisch geformten Abschnitt verfügen. Somit wird der Stempel oder Stift von der Klemmscheibe radial eingeengt, wenn sich der Klemmzylinder in der ersten Position befindet.

In einer vorteilhaften Ausgestaltung ist jede Längsachse der Stempel und Stifte senkrecht zu der Grundplatte angeordnet. Alternativ oder zusätzlich ist die Längsachse der Stempel und der Stifte senkrecht zu der festen Platte und/oder zu der beweglichen Platte angeordnet.

Um eine stabile und gleichzeitig auch wieder lösbare Verbindung zwischen Füllmaterial und formgebendem System herzustellen, sind bevorzugt auf den Stempeln Haltevorrichtungen angebracht. Die Haltevorrichtungen können insbesondere Greifer, Spannzangen, Klemmhülsen oder Dehnhülsen sein. Klemmhülsen oder Dehnhülsen können insbesondere auf Basis eines elektromechanischen, pneumatischen oder hydraulischen Prinzips arbeiten. Die Haltevorrichtung jedes Stempels ist so ausgelegt, dass entweder mit Hilfe eines elektromechanischen Aufbaus oder durch Absperrung eines pneumatischen oder hydraulischen Anschlusses die Klemmwirkung erhalten bleibt, wenn die erste Komponente von der zweiten Komponente getrennt wird

Wird das Füllmaterial direkt auf die Stempel aufgebracht, so ist bevorzugt vorgesehen, dass die Haltevorrichtungen auf den Stempeln mit jeweils einem Adapterelement, besonders bevorzugt aus demselben Material wie das Füllmaterial, versehen werden. Das Adapterelement ist insbesondere derart geformt, dass es durch die Haltevorrichtung festklemmbar ist. Außerdem weist das Adapterelement eine Oberfläche zur Aufnahme des Füllmaterials auf. Während des Aufbringprozesses des Füllmaterials entsteht eine feste Verbindung zwischen Adapterelement und Füllmaterial. Mit Hilfe des Adapterelements entsteht somit eine lösbare Verbindung zwischen Stempel und Füllmaterial. Sollte das Füllmaterial als separater Körper hergestellt werden, so werden die Adapterelemente vorteilhafterweise als Teil der Stützkonstruktion gefertigt, die an dem Füllmaterial verbleiben. Über die Adapterelemente ist das Füllmaterial mittels der Haltevorrichtungen festklemmbar, wodurch das Füllmaterial fest und sicher mit den Stempeln verbindbar ist.

Die Erfindung wird nun anhand eines Ausführungsbeispiels unter Zuhilfenahme der beigefügten Zeichnungen beschrieben. In den Zeichnungen sind:
- Figur 1: eine schematische Schnittansicht durch ein Objekt, das mit dem erfindungsgemäßen Verfahren gemäß einem Ausführungsbeispiel herstellbar ist,
- Figur 2: eine schematische Ansicht einer Vorrichtung gemäß einem ersten Ausführungsbeispiel der Erfindung,
- Figur 3: eine schematische Ansicht eines Längsschnitts einer Klemmvorrichtung der Vorrichtung gemäß dem Ausführungsbeispiel der Erfindung,
- Figur 4: ein Vergleich der unterschiedlichen Anordnungsmöglichkeiten der Klemmvorrichtung aus Figur 3,
- Figur 5: eine schematische Schnittansicht durch ein Objekt, das mit dem erfindungsgemäßen Verfahren gemäß einem ersten Ausführungsbeispiel oder zweitem Ausführungsbeispiel hergestellt werden soll,
- Figur 6: ein erster Schritt des erfindungsgemäßen Verfahrens gemäß dem ersten Ausführungsbeispiel und dem zweiten Ausführungsbeispiel zum Herstellen des Objekts aus Figur 5,
- Figur 7: ein zweiter Schritt des erfindungsgemäßen Verfahrens gemäß dem ersten Ausführungsbeispiel und dem zweiten Ausführungsbeispiel zum Herstellen des Objekts aus Figur 5,
- Figur 8: ein dritter Schritt des erfindungsgemäßen Verfahrens gemäß dem ersten Ausführungsbeispiel und dem zweiten Ausführungsbeispiel zum Herstellen des Objekts aus Figur 5,
- Figur 9: ein vierter Schritt des erfindungsgemäßen Verfahrens gemäß dem ersten Ausführungsbeispiel und dem zweiten Ausführungsbeispiel zum Herstellen des Objekts aus Figur 5,
- Figur 10: ein fünfter Schritt des erfindungsgemäßen Verfahrens gemäß dem ersten Ausführungsbeispiel und dem zweiten Ausführungsbeispiel zum Herstellen des Objekts aus Figur 5,
- Figur 11: ein sechster Schritt des erfindungsgemäßen Verfahrens gemäß dem ersten Ausführungsbeispiel und dem zweiten Ausführungsbeispiel zum Herstellen des Objekts aus Figur 5,
- Figur 12: ein siebter Schritt des erfindungsgemäßen Verfahrens gemäß ersten Ausführungsbeispiel und dem zweiten Ausführungsbeispiel zum Herstellen des Objekts aus Figur 5, und
- Figur 13: eine schematische Ansicht einer Vorrichtung gemäß einem zweiten Ausführungsbeispiel der Erfindung.

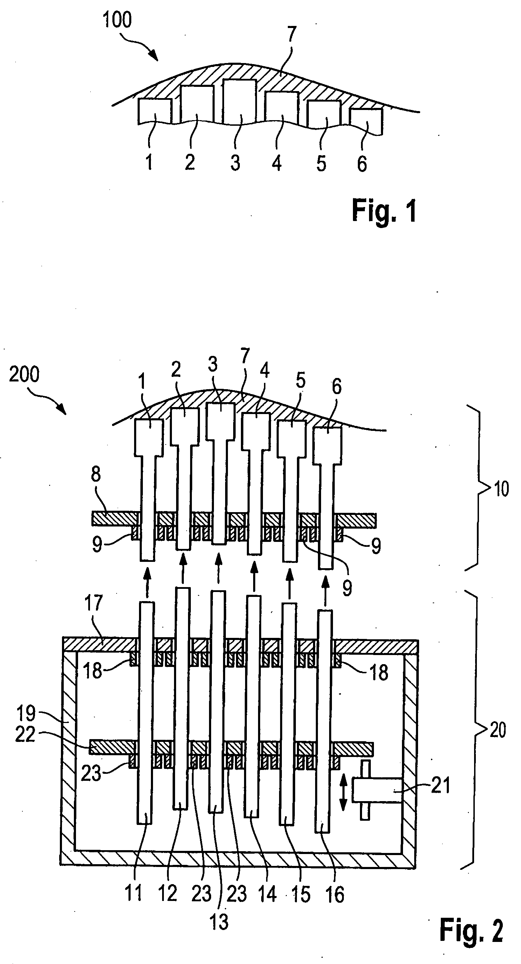

Figur 1 zeigt schematisch eine Schnittansicht durch ein dreidimensionales Objekt 100, das mit den erfindungsgemäßen Verfahren gemäß einem Ausführungsbeispiel herstellbar ist. Das Objekt 100 weist eine Kontur auf, die durch einen ersten Stempel 1, einen zweiten Stempel 2, einen dritten Stempel 3, einen vierten Stempel 4, einen fünften Stempel 5 und einen sechsten Stempel 6 sowie durch ein Restvolumen 7 gebildet wird. Dabei ist ersichtlich, dass die Stempel 1, 2, 3, 4, 5, 6 die Kontur nur grob abbilden, während die Feinabbildung durch das Restvolumen 7 geschieht.

Figur 2 zeigt eine Vorrichtung 200 gemäß einem ersten Ausführungsbeispiel der Erfindung. Mit der Vorrichtung 200 soll insbesondere das zuvor genannte Objekt 100 hergestellt werden. Daher umfasst die Vorrichtung 200 eine erste Komponente 10, die den ersten Stempel 1, den zweiten Stempel 2, den dritten Stempel 3, den vierten Stempel 4, den fünften Stempel 5 und den sechsten Stempel 6 umfasst. Auf diese Stempel 1, 2, 3, 4, 5, 6 wird, wie bereits erwähnt, das Restvolumen 7 aufgebracht, um eine Kontur des dreidimensionalen Objekts 100 zu erzeugen.

Die Stempel 1, 2, 3, 4, 5, 6 sind durch eine Grundplatte 8 hindurch geführt, so dass die Stempel 1, 2, 3, 4, 5, 6 senkrecht zu der Grundplatte 8 verschiebbar sind. Weiterhin weist jeder der Stempel 1, 2, 3, 4, 5, 6 eine erste Klemmvorrichtung 9 auf, mit der jeder Stempel an der Grundplatte 8 festklemmbar ist.

Die erste Komponente 10 ist auf eine zweite Komponente 20 aufsetzbar. Die zweite Komponente 20 umfasst einen ersten Stift 11, einen zweiten Stift 12, einen dritten Stift 13, einen vierten Stift 14, einen fünften Stift 15 und einen sechsten Stift 16. Dabei ist der erste Stift 11 dem ersten Stempel 1, der zweite Stift 12 dem zweiten Stempel 2, der dritte Stift 13 dem dritten Stempel 3, der vierte Stift 14 dem vierten Stempel 4, der fünfte Stift 15 dem fünften Stempel 5 und der sechste Stift 16 dem sechsten Stempel 6 zugeordnet. Sobald die erste Komponente 10 auf die zweite Komponente 20 aufgesetzt ist, ist durch ein Verschieben der Stifte 11, 12, 13, 14, 15, 16 entlang ihrer Längsachsen ein Verschieben der Stempel 1, 2, 3, 4, 5, 6 möglich. Dazu weist die zweite Komponente 20 eine bewegliche Platte 22 auf, die insbesondere durch einen Antrieb 21 beweglich ist. Die Stifte 11, 12, 13, 14, 15, 16 durchstoßen die bewegliche Platte 22, so dass die Stifte 11, 12, 13, 14, 15, 16 senkrecht zu der beweglichen Platte 22 verschiebbar sind. Weiterhin weist die bewegliche Platte 22 dritte Klemmvorrichtungen 23 auf, die ein Festklemmen der Stifte 11, 12, 13, 14, 15, 16 an der beweglichen Platte 22 erlauben. Zum Fixieren der Stifte 11, 12, 13, 14, 15, 16 ist eine feste Platte 17 vorhanden, die zweite Klemmvorrichtungen 18 aufweist. Der Aufbau der beweglichen Platte 22 und der festen Platte 17 ist vorteilhafterweise identisch, wobei die feste Platte 17 mit einem Gehäuse 19 der zweiten Komponente 20 verbunden ist. Um die Stifte 11, 12, 13, 14, 15, 16 zu bewegen, werden diese mittels der dritten Klemmvorrichtungen 23 an der beweglichen Platte 22 festgeklemmt. Durch den Antrieb 21 ist die bewegliche Platte 22 zusammen mit den Stiften 11, 12, 13, 14, 15, 16 bewegbar. Die Stifte 11, 12, 13, 14, 15, 16 verschieben gleichermaßen die Stempel 1, 2, 3, 4, 5, 6. Sollte ein Verschieben einzelner Stifte 11, 12, 13, 14, 15, 16 und Stempel 1, 2, 3, 4, 5, 6 nicht mehr nötig sein, so wird die dritte Klemmvorrichtung 23 geöffnet und die zweite Klemmvorrichtung 18 geschlossen. Auf diese Weise ist die bewegliche Platte 22 weiterhin, zusammen mit den an ihr festgeklemmten Stiften, beweglich, ohne dass die fixierten Stifte beeinträchtigt werden.

Soll die erste Komponente 10 von der zweiten Komponente 20 getrennt werden, so werden die Stempel 1, 2, 3, 4, 5, 6 durch die ersten Klemmvorrichtungen 9 an der Grundplatte 8 fixiert. Auf diese Weise ist die mit den Stempeln 1, 2, 3, 4, 5, 6 gebildete Kontur fixiert und damit unabhängig von den Stiften 11, 12, 13, 14, 15, 16.

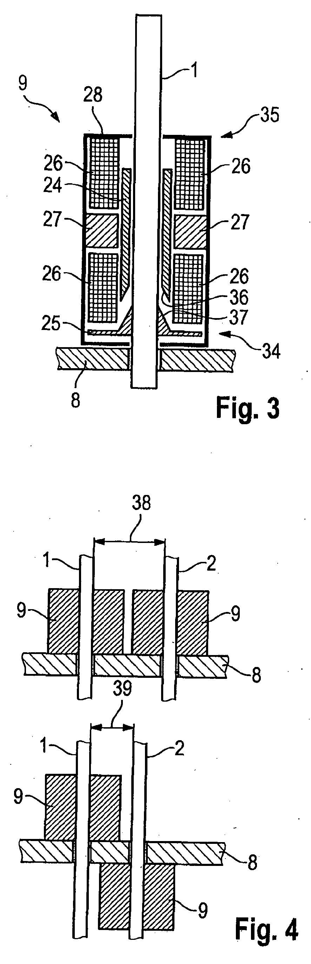

Figur 3 zeigt eine erste Klemmvorrichtung 9 der Vorrichtung 200 gemäß dem Ausführungsbeispiel der Erfindung. Hierbei ist insbesondere vorgesehen, dass die zweiten Klemmvorrichtungen 18 und die dritten Klemmvorrichtungen 23 identisch zu den ersten Klemmvorrichtungen 9 aufgebaut sind. Die erste Klemmvorrichtung 9 ist zylindrisch ausgeführt. In der Mitte der ersten Klemmvorrichtung 9 wird der zu klemmende Stempel, in dem in Figur 3 gezeigten Ausführungsbeispiel der erste Stempel 1, geführt. Dabei wird der erste Stempel 1 lediglich von einem Gehäuse 28 der ersten Klemmvorrichtung 9 geführt.

Weiterhin befindet sich ein Permanentmagnet 27 innerhalb des Gehäuses 28. Der Permanentmagnet 27 ist vorteilhafterweise axial in der Mitte der ersten Klemmvorrichtung 9 angeordnet. Oberhalb und unterhalb des Permanentmagneten befindet sich eine Spule 26. Um den ersten Stempel 1 herum ist ein magnetisierbarer Klemmzylinder 24 angeordnet. Der Klemmzylinder 24 ist insbesondere von einer ersten Position 34 in eine zweite Position 35 überführbar. Sowohl Klemmzylinder 24 als auch Klemmscheibe 25 weisen einen konischen Abschnitt auf. So umfasst der Klemmzylinder 24 einen ersten konischen Abschnitt 36, während die Klemmscheibe 25 einen zweiten konischen Abschnitt 37 aufweist. Sobald der Klemmzylinder 24 in die erste Position 34 überführt wird, wirkt der erste konische Abschnitt 36 des Klemmzylinders 24 auf den zweiten konischen Abschnitt 37 der Klemmscheibe 25. Auf diese Weise wird der erste Stempel 1 radial eingeengt, so dass eine Klemmwirkung erzielt wird.

Die Enden des Klemmzylinders 24 sind derart ausgestaltet, dass eines der Enden des Klemmzylinders 24 stets innerhalb eines Innenraums des Permanentmagneten 27 verbleibt. Daher ist der Klemmzylinder 24 stets magnetisch gepolt. Da das Gehäuse 28 mit dem Permanentmagneten 27 verbunden ist, ist auch das Gehäuse 28 permanent gepolt. Somit wird der Klemmzylinder 24 selbständig in der ersten Position 34 oder in der zweiten Position 35 gehalten. Durch entsprechende Beschaltung der Spulen 26 wird ein Magnetfluss aufgebaut, mit dem der Klemmzylinder 24 in die erste Position 34 oder die zweiten Position 35 überführt wird. In dieser neuen Position verbleibt der Klemmzylinder 24 dann aufgrund der Magnetisierung selbständig.

Es ist daher ersichtlich, dass die erste Klemmvorrichtung 9 eine stabile Klemmvorrichtung ist, die zum Behalten der Festklemmung keine Energie von außen benötigt. Es wird lediglich Energie zum Umschalten der ersten Klemmvorrichtung 9 von einem geklemmten Zustand in einen ungeklemmten Zustand und umgekehrt benötigt. Damit ist die erste Klemmvorrichtung 9 sehr zuverlässig und kostengünstig betreibbar.

Da sich die Klemmvorrichtungen radial um die Stempel 1, 2, 3, 4, 5, 6 und die Stifte 11, 12, 13, 14, 15, 16 erstrecken, wird ein Abstand zwischen den Stempeln 1, 2, 3, 4, 5, 6 sowie den Stiften 11, 12, 13, 14, 15, 16 sehr groß. Um dies zu vermeiden, ist vorteilhafterweise vorgesehen, dass die ersten Klemmvorrichtungen 9 und/oder die zweiten Klemmvorrichtungen 18 und/oder die dritten Klemmvorrichtungen 23 abwechselnd auf unterschiedlichen Seiten der Grundplatte 8 und/oder der festen Platte 17 und/oder der beweglichen Platte 22 angeordnet sind. Figur 4 zeigt dies am Beispiel des ersten Stempels 1 und des zweiten Stempels 2. Sind die ersten Klemmvorrichtungen 9 auf derselben Seite der Grundplatte 8 angeordnet, so ergibt sich ein großer Abstand 38 zwischen dem ersten Stempel 1 und dem zweiten Stempel 2. Sind jedoch die ersten Klemmvorrichtungen 9 auf unterschiedlichen Seiten der Grundplatte 8 angeordnet, so reduziert sich der große Abstand 38 zwischen dem ersten Stempel 1 und dem zweiten Stempel 2 auf einen deutlich kleineren Abstand 39. Durch eine derartige Anordnung ist es insbesondere möglich, die Dichte an Stempeln 1, 2, 3, 4, 5, 6 und/oder Stiften 11, 12, 13, 14, 15, 16 zu erhöhen.

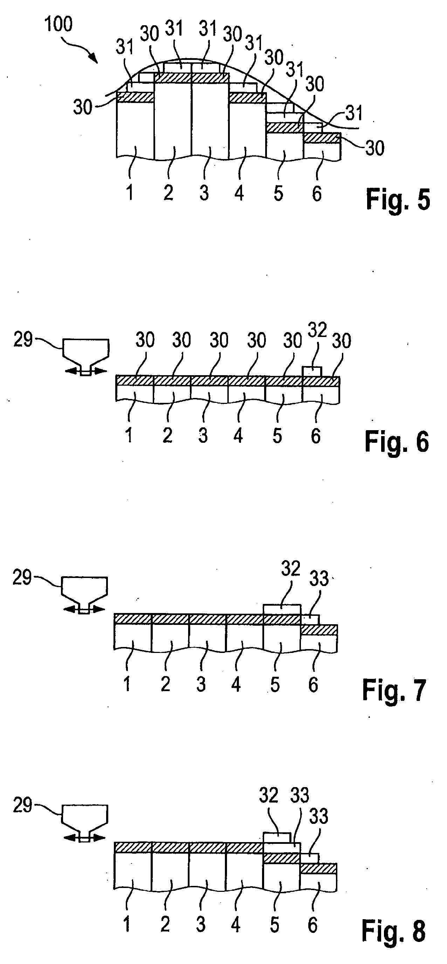

Figur 5 zeigt eine Schnittansicht durch ein dreidimensionales Objekt 100, das mit einem Verfahren gemäß einem ersten Ausführungsbeispiel oder zweitem Ausführungsbeispiel der Erfindung erzeugt werden soll. Dazu wird mittels des ersten Stempels 1, des zweiten Stempels 2, des dritten Stempels 3, des vierten Stempels 4, des fünften Stempels 5 und des sechsten Stempels 6 eine Stempelkontur gebildet. Auf die Oberflächen 30 der Stempel 1, 2, 3, 4, 5, 6 muss anschließend ein aufzubringendes Volumen 31 aufgebracht werden, um die Kontur des Objekts 100 zu erhalten.

Wie aus Figur 5 ersichtlich ist, ist für jeden der Stempel eine Endposition bestimmbar. Ebenso ist jedem der Stempel 1, 2, 3, 4, 5, 6 ein aufzubringendes Volumen 31 zugeordnet. Die folgenden Figuren 6 bis 12 zeigen nun, wie mittels des erfindungsgemäßen Verfahrens gemäß dem Ausführungsbeispiel das Objekt 100 hergestellt wird.

Die folgenden Figuren 6 bis 12 zeigen nun, wie mittels des erfindungsgemäßen Verfahrens gemäß dem ersten Ausführungsbeispiel das Objekt 100 hergestellt wird.

Figur 6 zeigt einen ersten Schritt. Dazu werden der erste Stempel 1, der zweite Stempel 2, der dritte Stempel 3, der vierte Stempel 4, der fünfte Stempel 5 und der sechste Stempel 6 in eine Ausgangslage gebracht, in der die Oberflächen 30 der Stempel 1, 2, 3, 4, 5, 6 eine Ebene bilden. Anschließend wird mittels eines Druckkopfs 29 ein Füllmaterial 32 auf die Oberfläche 30 derjenigen Stempel aufgebracht, die sich bereits in einer Endlage befinden. Dies ist lediglich bei dem sechsten Stempel 6 der Fall, so dass auf den sechsten Stempel 6 das Füllmaterial 32 aufgebracht wird. Anschließend werden der erste Stempel 1, der zweite Stempel 2, der dritte Stempel 3, der vierte Stempel 4 und der fünfte Stempel 5 derart verschoben, dass deren Oberflächen 30 zusammen mit der Oberfläche des bereits aufgebrachten Füllmaterials 33 auf dem sechsten Stempel 6 eine neue Ebene bilden.

Figur 7 zeigt einen zweiten Schritt des Verfahrens. Hier wird wiederum bestimmt, welcher der Stempel 1, 2, 3, 4, 5 seine Endlage erreicht hat. Dies ist bei dem fünften Stempel 5 der Fall. Daher wird auf die Oberfläche 30 des fünften Stempels 5 das Füllmaterial 32 aufgebracht. Anschließend werden der erste Stempel 1, der zweite Stempel 2, der dritte Stempel 3 und der vierte Stempel 4, die eine Endlage noch nicht erreicht haben, derart verschoben, dass deren Oberflächen 30 zusammen mit der Oberfläche des bereits aufgebrachten Füllmaterials 33 auf dem fünften Stempel 5 eine neue Ebene bilden. Dies ist in Figur 8 gezeigt, wobei Figur 8 einen dritten Schritt des Verfahrens anzeigt.

Durch die Verschiebung des ersten Stempels 1, des zweiten Stempels 2, des dritten Stempels 3 und des vierten Stempels 4 bilden die Oberflächen 30 dieser Stempel 1, 2, 3, 4 mit der Oberfläche des bereits aufgetragenen Füllmaterials 33 des fünften Stempels 5 eine ebene Fläche. Da hier wiederum lediglich der fünfte Stempel 5 in einer Endlage vorliegt, wird wiederum lediglich der fünfte Stempel 5 mit einem Füllmaterial 32 versehen. Somit wird das Füllmaterial 32 auf eine Oberfläche des bereits aufgetragenen Füllmaterials 33 auf dem fünften Stempel 5 aufgetragen.

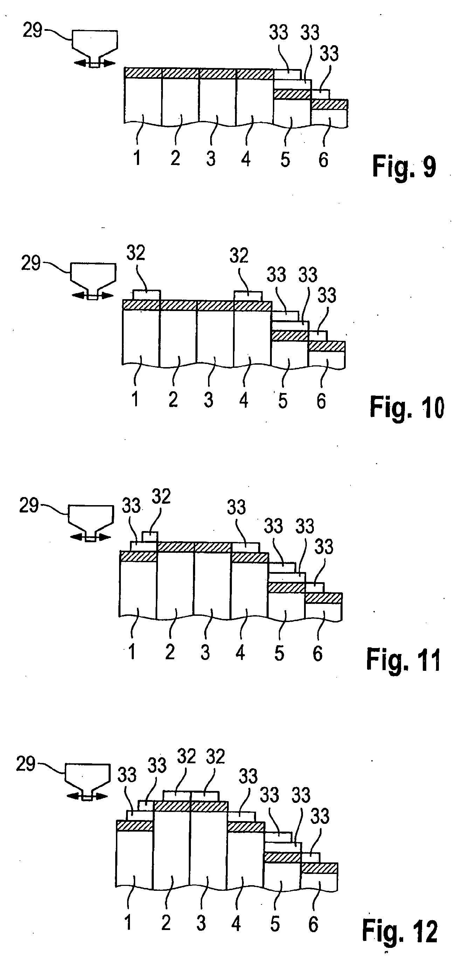

Figur 9 zeigt einen vierten Schritt des Verfahrens. Wiederum wurden der erste Stempel 1, der zweite Stempel 2, der dritte Stempel 3 und der vierte Stempel 4 verschoben. Alle diese Stempel 1, 2, 3, 4 haben jedoch eine Endlage noch nicht erreicht. Der fünfte Stempel 5 umfasst nun durch das bereits aufgetragene Füllmaterial 33 das ihm zugeordnete aufzubringende Volumen 31 (vergleiche Figur 5). Somit findet im vierten Schritt kein Druckvorgang durch den Druckkopf 29 statt.

Figur 10 zeigt einen fünften Schritt des Verfahrens. Wiederum wurden der erste Stempel 1, der zweite Stempel 2, der dritte Stempel 3 und der vierte Stempel 4 verschoben. Da sich nun der ersten Stempel 1 und der vierte Stempel 4 in einer Endlage befinden, wird auf die Oberflächen 30 dieser beiden Stempel 1, 4 das Füllmaterial 32 aufgebracht.

Figur 11 zeigt einen sechsten Schritt des Verfahrens. Hierbei wurden der zweite Stempel 2 und der dritte Stempel 3 verschoben. Beide Stempel 2, 3 befinden sich jedoch noch nicht in einer Endlage, so dass lediglich auf den ersten Stempel 1 ein Füllmaterial 32 durch den Druckkopf 29 aufgebracht wird. Dies geschieht, wie bereits beim fünften Stempel 5, auf die Oberfläche des bereits aufgetragenen Füllmaterials 33 auf dem ersten Stempel 1.

Figur 12 zeigt schließlich einen siebten Schritt des Verfahrens. Hierbei wurden wiederum der zweite Stempel 2 und der dritte Stempel 3 verschoben, so dass sich diese Stempel 2, 3 jetzt in einer Endlage befinden. Auf den zweiten Stempel 2 und den dritten Stempel 3 wurde ein Füllmaterial 32 aufgebracht. Somit wurde das Restvolumen 7 nahezu vollständig durch das Füllmaterial 32 aufgefüllt. Durch die Wahl einer entsprechenden Schichtdicke, das heißt, durch die Wahl der Dicke des aufzubringenden Füllmaterials 32 pro Auftragungs- oder Druckvorgang ist eine Güte der Oberfläche des Objekts 100 einstellbar. Das gezeigte Ausführungsbeispiel zeigt ein Objekt 100 mit sehr geringer Oberflächengüte, um das erfindungsgemäße Verfahren in dem Ausführungsbeispiel anschaulich beschreiben zu können.

Als Alternative hierzu ist das Objekt 100 mit dem erfindungsgemäßen Verfahren gemäß dem zweiten Ausführungsbeispiel herstellbar. Hierzu werden die in Figuren 6 bis 12 gezeigten Schritte alternativ folgendermaßen ausgeführt:
Der erste Schritt ist alternativ folgendermaßen ausführbar: Wiederum wird festgestellt, welche der Stempel 1, 2, 3, 4, 5, 6 sich in einer Endposition befinden. Dies ist lediglich bei dem zweiten Stempel 2 und dem dritten Stempel 3 der Fall. Der erste Stempel 1, der vierte Stempel 4, der fünfte Stempel 5 und der sechste Stempel 6 müssen abgesenkt werden, um die Endpositionen zu erreichen. Da der sechste Stempel 6 am weitesten abgesenkt werden muss, wird zunächst der sechste Stempel 6 mit dem Füllmaterial 32 versehen. Anschließend wird der sechste Stempel 6 abgesenkt, so dass die Oberflächen des ersten Stempels 1, des zweiten Stempels 2, des dritten Stempels 3, des vierten Stempels 4 und des fünften Stempels 5 mit der Oberfläche des bereits aufgetragenen Füllmaterials 33 auf dem sechsten Stempel 6 eine neue Ebene bilden.

Der in Figur 7 gezeigte zweite Schritt des Verfahrens wird alternativ folgendermaßen ausgeführt: Wiederum wird bestimmt, welcher der Stempel 1, 2, 3, 4, 5, 6 einen weitesten Verschiebungsweg bis zum Erreichen der Endposition aufweist. Dies ist neben dem bereits verschobenen sechsten Stempel 6 der fünfte Stempel 5. Auf dem sechsten Stempel 6 ist durch das aufgetragene Füllmaterial 33 das aufzubringende Volumen 31 bereits aufgefüllt. Daher wird im zweiten Schritt lediglich der fünfte Stempel 5 mit einem Füllmaterial 32 versehen. Anschließend werden alle Stempel 1, 2, 3, 4, 5, 6 mit aufgetragenem Füllmaterial 33 abgesenkt. Dies trifft lediglich auf den fünften Stempel 5 und den sechsten Stempel 6 zu. Somit wird ausschließlich der fünfte Stempel 5 sowie der sechste Stempel 6 abgesenkt.

Der in Figur 8 gezeigte dritte Schritt des Verfahrens wird alternativ folgendermaßen ausgeführt. Wiederum weisen der fünfte Stempel 5 und der sechste Stempel 6 einen maximalen Verschiebeweg auf, der benötigt wird, um die Endposition zu erreichen. Auf dem fünften Stempel 5 ist das aufzubringende Volumen 31 noch nicht aufgefüllt. Damit wird auf die Oberfläche des bereits aufgetragenen Füllmaterials 33 auf dem fünften Stempel 5 ein zusätzliches Füllmaterial 32 aufgebracht. Anschließend werden der fünfte Stempel 5 und der sechste Stempel 6 abgesenkt, da dies die einzigen Stempel sind, die ein aufgetragenes Füllmaterial 33 aufweisen.

Der vierte Schritt aus Fig. 9 wird alternativ folgendermaßen ausgeführt: Wiederum sind der fünfte Stempel 5 und der sechste Stempel 6 diejenigen Stempel mit dem weitesten Verfahrweg bis zu der Endposition. Da jedoch das aufzubringende Volumen 31 sowohl für den fünften Stempel 5 als auch für den sechsten Stempel 6 bereits aufgebracht ist, wird in diesem Schritt kein Füllmaterial 32 aufgebracht. Es werden lediglich sämtliche Stempel mit aufgetragenem Material 33 abgesenkt, was somit lediglich auf den fünften Stempel 5 und den sechsten Stempel 6 zutrifft.

Der in Fig. 10 gezeigte fünfte Schritt wird alternativ folgendermaßen ausgeführt. Die weitesten Verfahrwege weisen in dieser Position der erste Stempel 1, der vierte Stempel 4, der fünfte Stempel 5 und der sechste Stempel 6 auf. Auf den fünften Stempel 5 und auf den sechsten Stempel 6 muss kein Füllmaterial 32 mehr aufgebracht werden, wie im vierten Schritt bereits gezeigt wurde. Daher wird das Füllmaterial 32 lediglich auf den ersten Stempel 1 und auf den vierten Stempel 4 aufgebracht. Wiederum werden sämtliche Stempel 1, 2, 3, 4, 5, 6 mit aufgetragenem Füllmaterial 33 abgesenkt, was im fünften Schritt auf den ersten Stempel 1, den vierten Stempel 4, den fünften Stempel 5 und den sechsten Stempel 6 zutrifft.

Der in Fig. 11 gezeigte sechste Schritt wird alternativ folgendermaßen ausgeführt. Den weitesten Verfahrweg bis zu der Endposition weisen der erste Stempel 1, der vierte Stempel 4, der fünfte Stempel 5 und der sechste Stempel 6 auf. Lediglich für den ersten Stempel 1 ist das aufzubringende Material 31 nicht vollständig aufgefüllt. Somit wird das Füllmaterial 32 im sechsten Schritt ausschließlich auf den ersten Stempel 1 aufgebracht. Anschließend wird der erste Stempel 1, der vierte Stempel 4, der fünfte Stempel 5 und der sechste Stempel 6 abgesenkt, da lediglich diese Stempel 1, 4, 5, 6 ein aufgetragenes Füllmaterial 33 aufweisen.

Der siebte Schritt aus Fig. 12 wird alternativ wie folgt ausgeführt. Da nach dem Verfahren des ersten Stempels 1, des vierten Stempels 4, des fünften Stempels 5 und des sechsten Stempels 6 aus dem sechsten Schritt sämtliche Stempel ihre Endposition erreicht haben, ist ein Verfahrweg für alle Stempel 1, 2, 3, 4, 5, 6 gleich, da dieser zu Null wird. Da jedoch lediglich der zweite Stempel 2 und der dritte Stempel 3 noch nicht mit dem aufzubringenden Volumen 31 versehen sind, wird lediglich auf den zweiten Stempel 2 und auf den dritten Stempel 3 das Füllmaterial 32 aufgebracht.

Das alternative Ausführungsbeispiel des erfindungsgemäßen Verfahrens erlaubt ein Aufbringen des Füllmaterials 32 auf eine bezüglich des Druckkopfs 29 konstante Ebene. Somit muss der Druckkopf 29 nicht verschoben werden, wie dies im vorherigen Ausführungsbeispiel der Fall war.

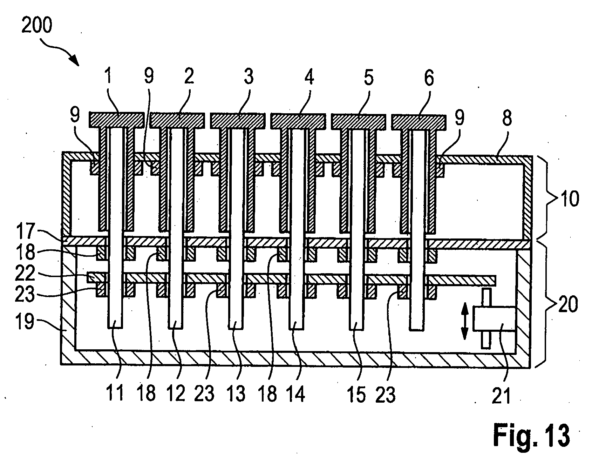

Figur 13 zeigt eine Vorrichtung 200 gemäß einer zweiten Ausführungsform der Erfindung. Hierbei sind die Stempel 1, 2, 3, 4, 5, 6 hülsenförmig ausgebildet, so dass die Stifte 11, 12, 13, 14, 15, 16 in die Stempel 1, 2, 3, 4, 5, 6 eingreifen. Ansonsten sind gleiche oder funktional gleiche Elemente mit den gleichen Bezugszeichen versehen wie in Figur 2.

Sobald das Objekt 100 fertiggestellt wurde, ist die erste Komponente 10 von der zweiten Komponente 20 abnehmbar. Dazu müssen die Stempel 1, 2, 3, 4, 5, 6 durch die ersten Klemmvorrichtungen 9 an der Grundplatte 8 festgeklemmt werden. Anschließend ist die erste Komponente 10 beispielsweise in einen Formenhalter einspannbar, so dass das Objekt 100 als Form für weitere Arbeitsprozesse dient.

Es ist ersichtlich, dass mit dem erfindungsgemäßen Verfahren sehr schnell und kostengünstig eine dreidimensionale Form herstellbar ist. Insbesondere ist diese Form dadurch sehr schnell herstellbar, dass eine grobe Kontur durch die Stempel 1, 2, 3, 4, 5, 6 einstellbar ist, so dass lediglich ein kleines Restvolumen 7 mit Füllmaterial 32 aufzufüllen ist, um die exakte Kontur der Form herzustellen. Weiterhin ist ersichtlich, dass die so erstellte Form wiederverwendbar ist, indem das aufgetragene Füllmaterial 33 entfernt und die Stempel 1, 2, 3, 4, 5, 6 in die Ausgangslage (vergleiche Figur 6) gebracht werden. Auf diese Weise ist das Herstellen eines neuen dreidimensionalen Objekts und damit einer neuen Form möglich.

### Bezugszeichenliste

- 1: Erster Stempel
- 2: Zweiter Stempel
- 3: Dritter Stempel
- 4: Vierter Stempel
- 5: Fünfter Stempel
- 6: Sechster Stempel
- 7: Restvolumen
- 8: Grundplatte
- 9: Erste Klemmvorrichtung
- 10: Erste Komponente
- 11: Erster Stift
- 12: Zweiter Stift
- 13: Dritter Stift
- 14: Vierter Stift
- 15: Fünfter Stift
- 16: Sechster Stift
- 17: Bewegliche Platte
- 18: Zweite Klemmvorrichtung
- 19: Gehäuse
- 20: Zweite Komponente
- 21: Antrieb
- 22: Bewegliche Platte
- 23: Dritte Klemmvorrichtung
- 24: Klemmzylinder
- 25: Klemmscheibe
- 26: Spule
- 27: Dauermagnet
- 28: Gehäuse der Klemmvorrichtung
- 29: Druckkopf
- 30: Oberfläche der Stempel
- 31: Aufzubringendes Volumen der Stempel
- 32: Füllmaterial
- 33: Aufgetragenes Füllmaterial
- 34: Erste Position des Klemmzylinders
- 35: Zweite Position des Klemmzylinders
- 36: Erster konischer Abschnitt
- 37: Zweiter konischer Abschnitt
- 38: Großer Abstand
- 39: Kleiner Abstand
- 100: Objekt
- 200: Vorrichtung

## Patentansprüche

1. Verfahren zum Herstellen eines dreidimensionalen Objekts (100), insbesondere einer Form, umfassend die Schritte:
- Bereitstellen einer Vielzahl von Stempeln (1, 2, 3, 4, 5, 6), die eine Längsachse aufweisen, an einer Grundplatte angebracht sind und entlang der Längsachse verschiebbar sind, sowie einer Vielzahl von Stiften (11, 12, 13, 14, 15, 16), wobei jeder Stift (11, 12, 13, 14, 15, 16) einem Stempel (1, 2, 3, 4, 5, 6) zugeordnet ist und an einer festen Platte (17) sowie an einer beweglichen Platte (22) angebracht ist,
- Formen einer Stempelkontur mittels der Stempel (1, 2, 3, 4, 5, 6) durch Verschieben der einzelnen Stempel (1, 2, 3, 4, 5, 6) entlang ihrer Längsachse, wobei die Stempel (1, 2, 3, 4, 5, 6) durch die Stifte (11, 12, 13, 14, 15, 16) verschiebbar sind und die Stifte (11, 12, 13, 14, 15, 16) durch die bewegliche Platte (22) verschiebbar sind,
- Bestimmen eines Restvolumens (7) zwischen der Stempelkontur und einer Kontur des dreidimensionalen Objekts (100), und
- Aufbringen eines Füllmaterials auf zumindest eine Oberfläche (30) zumindest eines Stempels (1, 2, 3, 4, 5, 6), so dass das Restvolumen zumindest teilweise mit Füllmaterial gefüllt wird.

2. Verfahren nach Anspruch 1, **dadurch gekennzeichnet, dass** das Aufbringen des Füllmaterials auf die Oberfläche (30) der Stempel (1, 2, 3, 4, 5, 6) schichtweise ausgeführt wird.

3. Verfahren nach einem der vorhergehenden Ansprüche, **dadurch gekennzeichnet, dass** für jeden Stempel (1, 2, 3, 4, 5, 6) ein aufzubringendes Volumen (31) bestimmt wird, das auf die Oberfläche (30) des Stempels (1, 2, 3, 4, 5, 6) aufzubringen ist, um das Restvolumen (7), zumindest teilweise, aufzufüllen.

4. Verfahren nach einem der vorhergehenden Ansprüche, **dadurch gekennzeichnet, dass** für jeden Stempel (1, 2, 3, 4, 5, 6) eine Endposition bestimmt ist und das Aufbringen des Füllmaterials die folgenden Schritte umfasst:
- Verschieben der Stempel (1, 2, 3, 4, 5, 6) in eine Grundposition, in der die Oberflächen (30) der Stempel (1, 2, 3, 4, 5, 6) eine Ebene bilden,
- Überprüfen, ob mindestens ein Stempel (1, 2, 3, 4, 5, 6) seine Endposition erreicht hat,
- Aufbringen des Füllmaterials (32) auf zumindest einen Teil der Stempel (1, 2, 3, 4, 5, 6),
- Verschieben zumindest eines Teils der Stempel (1, 2, 3, 4, 5, 6), die keine Endposition erreicht haben,
- wobei die Schritte des Überprüfens, Aufbringens und Verschiebens wiederholt ausgeführt werden, bis alle Stempel die Endposition erreicht haben.

5. Verfahren nach Anspruch 4, **dadurch gekennzeichnet, dass**
- das Füllmaterial (32) ausschließlich auf diejenigen Stempel (1, 2, 3, 4, 5, 6) aufgebracht wird, die einen größten Verschiebeweg aller Stempel (1, 2, 3, 4, 5, 6) bis zum Erreichen einer Endposition aufweisen, wobei das Verschieben ein Absenken ist, oder
- das Füllmaterial (32) ausschließlich auf diejenigen Stempel (1, 2, 3, 4, 5, 6) aufgebracht wird, die eine Endposition bereits erreicht haben, wobei das Verschieben ein Anheben ist.

6. Verfahren nach einem der vorhergehenden Ansprüche, **dadurch gekennzeichnet, dass** das Füllmaterial (32) mit einem Druckkopf (29) aufgebracht wird.

7. Verfahren nach Anspruch 1, **gekennzeichnet dadurch, dass** ein separater Körper aus Füllmaterial (32), insbesondere mittels Methoden des Rapid Prototyping, gefertigt wird, wobei anschließend der separate Körper auf die Oberfläche (30) des zumindest einen Stempels (1, 2, 3, 4, 5, 6) aufgebracht wird, um das Restvolumen (7) zumindest teilweise aufzufüllen.

8. Vorrichtung (200), insbesondere zum Durchführen des Verfahrens gemäß einem der vorhergehenden Ansprüche, umfassend
- eine erste Komponente (10), umfassend eine Vielzahl von Stempeln (1, 2, 3, 4, 5, 6), die jeweils eine Längsachse aufweisen und an einer Grundplatte (8) angebracht sind, wobei die Stempel (1, 2, 3, 4, 5, 6) entlang ihrer Längsachse verschiebbar sind,
- eine zweite Komponente (20), umfassend eine Vielzahl von Stiften (11, 12, 13, 14, 15, 16), wobei jeder Stift (11, 12, 13, 14, 15, 16) einem Stempel (1, 2, 3, 4, 5, 6) zugeordnet ist, sich entlang der Längsachse des zugeordneten Stempels (1, 2, 3, 4, 5, 6) erstreckt, und an einer festen Platte (17) sowie an einer beweglichen Platte (22) angebracht ist,
- wobei die Stifte (11, 12, 13, 14, 15, 16) durch die bewegliche Platte (22) verschiebbar sind und wobei die Stempel (1, 2, 3, 4, 5, 6) durch die Stifte (11, 12, 13, 14, 15, 16) verschiebbar sind.

9. Vorrichtung (200) nach Anspruch 8, **dadurch gekennzeichnet, dass** die Grundplatte (8) erste Klemmvorrichtungen (9) aufweist, mit denen die Stempel (1, 2, 3, 4, 5, 6) unabhängig voneinander an der Grundplatte (8) festklemmbar sind und/oder die feste Platte (17) zweite Klemmvorrichtungen (18) aufweist, mit denen die Stifte (11, 12, 13, 14, 15, 16) unabhängig voneinander an der festen Platte (17) festklemmbar sind und/oder die bewegliche Platte (22) dritte Klemmvorrichtungen (23) aufweist, mit denen die Stifte (11, 12, 13, 14, 15, 16) unabhängig voneinander an der beweglichen Platte (22) festklemmbar sind.

10. Vorrichtung (200) nach Anspruch 9, **dadurch gekennzeichnet, dass** die ersten Klemmvorrichtungen (9) und/oder die zweiten Klemmvorrichtungen (18) und/oder die dritten Klemmvorrichtungen (23) magnetische Klemmvorrichtungen sind.

11. Vorrichtung (200) nach einem der Ansprüche 9 oder 10, **dadurch gekennzeichnet, dass** eine Verschiebung der Stifte (11, 12, 13, 14, 15, 16) ein Festklemmen der Stifte (11, 12, 13, 14, 15, 16) an der beweglichen Platte (22) und/oder ein Fixieren der Stifte (11, 12, 13, 14, 15, 16) ein Festklemmen der Stifte (11, 12, 13, 14, 15, 16) an der festen Platte (17) umfasst.

12. Vorrichtung (200) nach einem der Ansprüche9 bis 11, **dadurch gekennzeichnet, dass** die ersten Klemmvorrichtungen (9) und/oder die zweiten Klemmvorrichtungen (18) und/oder die dritten Klemmvorrichtungen (23) eine Klemmscheibe (25) sowie einen Klemmzylinder (24) aufweisen, der entlang der Längsachse von einer ersten Position (34) in eine zweite Position (35) verschiebbar ist, wobei der Klemmzylinder (24) in der ersten Position (34) auf die Klemmscheibe (25) einwirkt, so dass ein Festklemmen der Stempel (1, 2, 3, 4, 5, 6) und/oder der Stifte (11, 12, 13, 14, 15, 16) entsteht, und wobei in der zweiten Position (35) der Klemmzylinder (24) von der Klemmscheibe (25) getrennt ist.

13. Vorrichtung nach einem der Ansprüche 9 bis 12, **dadurch gekennzeichnet, dass** die Längsachse senkrecht auf der Grundplatte (8) steht und/oder die Längsachse senkrecht auf der festen Platte (17) und/oder der beweglichen Platte (22) steht.

## Claims

1. A method for generating a three-dimensional object (100), particularly a mold, comprising the steps of:
- providing a plurality of stamps (1, 2, 3, 4, 5, 6) which have a longitudinal axis, are mounted on a base plate and are displaceable along the longitudinal axis, and a plurality of pins (11, 12, 13, 14, 15, 16), each pin (11, 12, 13, 14, 15, 16) being assigned to a stamp (1, 2, 3, 4, 5, 6) and being mounted on a fixed plate (17) and on a movable plate (22),
- forming a stamp contour by means of the stamps (1, 2, 3, 4, 5, 6) by displacing the individual stamps (1, 2, 3, 4, 5, 6) along their longitudinal axis, said stamps (1, 2, 3, 4, 5, 6) being displaceable by said pins (11, 12, 13, 14, 15, 16), and said pins (11, 12, 13, 14, 15, 16) being displaceable by the movable plate (22),
- determining a residual volume (8) between the stamp contour and a contour of the three-dimensional object (11), and
- applying a fill material to at least one surface (30) of at least one stamp (1, 2, 3, 4, 5, 6), so that the residual volume is filled at least in part with filling material.

2. The method according to claim 1, **characterized in that** the application of the filling material to the surface (30) of the stamps (1, 2, 3, 4, 5, 6) is carried out layer by layer.

3. The method according to any one of the preceding claims, **characterized in that** a volume (31) to be applied is determined for each stamp (1, 2, 3, 4, 5, 6), which volume has to be applied to the surface (30) of the stamp (1, 2, 3, 4, 5, 6) to fill up the residual volume (7), at least in part.

4. The method according to any one of the preceding claims, **characterized in that** an end position is determined for each stamp (1, 2, 3, 4, 5, 6), and the application of the filling material comprises the following steps:
- displacing the stamps (1, 2, 3, 4, 5, 6) into a basic position in which the surfaces (30) of the stamps (1, 2, 3, 4, 5, 6) form a plane,
- checking whether at least one stamp (1, 2, 3, 4, 5, 6) has reached its end position,
- applying the filling material (32) to at least a part of the stamps (1, 2, 3, 4, 5, 6),
- displacing at least a part of the stamps (1, 2, 3, 4, 5, 6) that have not reached the end position,
- wherein the steps of checking, applying and displacing are carried out repeatedly until all stamps have reached the end position.

5. The method according to claim 4, **characterized in that**
- the filling material (32) is exclusively applied to the stamps (1, 2, 3, 4, 5, 6) that show a maximum displacement path of all stamps (1, 2, 3, 4, 5, 6) until an end position is reached, the displacement being a lowering movement, or
- the filling material (32) is exclusively applied to those stamps (1, 2, 3, 4, 5, 6) that have already reached an end position, wherein the displacement is a lifting movement.

6. The method according to any one of the preceding claims, **characterized in that** the filling material (32) is applied with a printhead (29).

7. The method according to claim 1, **characterized in that** a separate body is made from filling material (32), particularly by way of rapid prototyping methods, wherein the separate body is subsequently applied to the surface (30) of the at least one stamp (1, 2, 3, 4, 5, 6) to fill up the residual volume (7) at least in part.

8. A device (200), particularly for performing the method according to any one of the preceding claims, comprising
- a first component (10), comprising a plurality of stamps (1, 2, 3, 4, 5, 6), each having a longitudinal axis and being mounted on a base plate (8), wherein the stamps (1, 2, 3, 4, 5, 6) are displaceable along their longitudinal axis,
- a second component (20), comprising a plurality of pins (11, 12, 13, 14, 15, 16), wherein each pin (11, 12, 13, 1,4, 15, 16) is assigned to a stamp (1, 2, 3, 4, 5, 6), extends along the longitudinal axis of the associated stamp (1, 2, 3, 4, 5, 6) and is mounted on a fixed plate (17) and on a movable plate (22),
- wherein the pins (11, 12, 13, 14, 15, 16) are displaceable by the movable plate (22), and wherein the stamps (1, 2, 3, 4, 5, 6) are displaceable by the pins (11, 12, 13, 14, 15, 16).

9. The device (200) according to claim 8, **characterized in that** the base plate (8) comprises first clampers (9) with which the stamps (1, 2, 3, 4, 5, 6) can be clamped independently of one another onto the base plate (8), and or the fixed plate (17) comprises second clampers (18) with which the pins (11, 12, 13, 14, 15, 16) can be clamped independently of one another to the fixed plate (17), and/or the movable plate (22) comprises third clampers (23) with which the pins (11, 12, 13, 14, 15, 16) can be clamped independently of one another to the movable plate (22).

10. The device (200) according to claim 9, **characterized in that** the first clampers (9) and/or the second clampers (18) and/or the third clampers (23) are magnetic clampers.

11. The device (200) according to any one of claims 9 or 10, **characterized in that** a displacement of the pins (11, 12, 13, 14, 15, 16) comprises a clamping of the pins (11, 12, 13, 14, 15, 16) to the movable plate (22) and/or a fixing of the pins (11, 12, 13, 14, 15, 16) comprises a clamping of the pins (11, 12, 13, 14, 15, 16) to the fixed plate (17).

12. The device (200) according to any one of claims 9 to 11, **characterized in that** the first clampers (9) and/or the second clampers (18) and/or the third clampers (23) comprise a clamping disk (25) as well as a clamping cylinder (24) which is displaceable along the longitudinal axis from a first position (34) into a second position (35), wherein the clamping cylinder (24) in the first position (34) acts on the clamping disk (25), resulting in a clamping of the stamps (1, 2, 3, 4, 5, 6) and/or the pins (11, 12, 13, 14, 15, 16), and wherein in the second position (35) the clamping cylinder (24) is separated from the clamping disk (25).

13. The device according to any one of claims 9 to 12, **characterized in that** the longitudinal axis is perpendicular to the base plate (8), and/or the longitudinal axis is perpendicular to the fixed plate (17) and/or to the movable plate (22).

## Revendications

1. Procédé de production d'un objet tridimensionnel (100), en particulier d'un moule, comportant les étapes de :
- préparation d'une pluralité de moules mâles (1, 2, 3, 4, 5, 6) qui présentent un axe longitudinal, sont installés sur une plaque de base et peuvent être déplacés le long de l'axe longitudinal, ainsi que d'une pluralité de broches (11, 12, 13, 14, 15, 16), chaque broche (11, 12, 13, 14, 15, 16) étant associée à un moule mâle (1, 2, 3, 4, 5, 6) et installée sur une plaque fixe (17) ainsi que sur une plaque mobile (22),
- formation d'un contour de moule mâle au moyen du moule mâle (1, 2, 3, 4, 5, 6) par déplacement des différents moules mâles (1, 2, 3, 4, 5, 6) le long de leur axe longitudinal, les moules mâles (1, 2, 3, 4, 5, 6) pouvant être déplacés par les broches (11, 12, 13, 14, 15, 16) et les broches (11, 12, 13, 14, 15, 16) pouvant être déplacées par la plaque mobile (22),
- détermination d'un volume restant (7) entre le contour de moule mâle et un contour de l'objet tridimensionnel (100), et
- application d'un matériau de remplissage sur au moins une surface (30) d'au moins un moule mâle (1, 2, 3, 4, 5, 6) de sorte que le volume restant soit au moins rempli en partie avec le matériau de remplissage.

2. Procédé selon la revendication 1, **caractérisé en ce que** l'application du matériau de remplissage sur la surface (30) du moule mâle (1, 2, 3, 4, 5, 6) est exécutée couche par couche.

3. Procédé selon l'une quelconque des revendications précédentes, **caractérisé en ce qu'**il est déterminé pour chaque moule mâle (1, 2, 3, 4, 5, 6), un volume à appliquer (31) qui doit être appliqué sur la surface (30) du moule mâle (1, 2, 3, 4, 5, 6) pour remplir au moins en partie le volume restant (7).

4. Procédé selon l'une quelconque des revendications précédentes, **caractérisé en ce qu'**il est déterminé pour chaque moule mâle (1, 2, 3, 4, 5, 6) une position finale et que l'application du matériau de remplissage comporte les étapes suivantes :
- déplacement des moules mâles (1, 2, 3, 4, 5, 6) à une position de base dans laquelle les surfaces (30) des moules mâles (1, 2, 3, 4, 5, 6) forment un plan,
- vérification si au moins un moule mâle (1, 2, 3, 4, 5, 6) a atteint sa position finale,
- application du matériau de remplissage (32) sur au moins une partie des moules mâles (1, 2, 3, 4, 5, 6),
- déplacement au moins d'une partie des moules mâles (1, 2, 3, 4, 5, 6) qui n'ont pas atteint la position finale,
- les étapes de vérification, d'application et de déplacement étant exécutées à maintes reprises jusqu'à ce que tous les moules mâles aient atteint la position finale.

5. Procédé selon la revendication 4, **caractérisé en ce que**
- le matériau de remplissage (32) est appliqué exclusivement sur les moules mâles (1, 2, 3, 4, 5, 6) qui présentent le plus grand trajet de déplacement de tous les moules mâles (1, 2, 3, 4, 5, 6) jusqu'à l'atteinte d'une position finale, le déplacement étant un abaissement, ou
- le matériau de remplissage (32) est appliqué exclusivement sur les moules mâles (1, 2, 3, 4, 5, 6) qui ont déjà atteint une position finale, le déplacement étant un soulèvement.

6. Procédé selon l'une quelconque des revendications précédentes, **caractérisé en ce que** le matériau de remplissage (32) est appliqué avec une tête de pression (29).

7. Procédé selon la revendication 1, **caractérisé en ce qu'**un corps séparé est fabriqué dans le matériau de remplissage (32), en particulier au moyen de procédés de la réalisation rapide de prototypes, ensuite le corps séparé est appliqué sur la surface (30) du au moins un moule mâle (1, 2, 3, 4, 5, 6) afin de remplir au moins en partie le volume restant (7).

8. Dispositif (200), en particulier pour l'exécution du procédé selon l'une quelconque des revendications précédentes, comportant
- un premier composant (10), comportant une pluralité de moules mâles (1, 2, 3, 4, 5, 6) qui présentent un axe longitudinal et qui sont installés sur une plaque de base (8), les moules mâles (1, 2, 3, 4, 5, 6) pouvant être déplacés le long de leur axe longitudinal,
- un second composant (20), comportant une pluralité de broches (11, 12, 13, 14, 15, 16), chaque broche (11, 12, 13, 14, 15, 16) étant associée à un moule mâle (1, 2, 3, 4, 5, 6), s'étendant le long de l'axe longitudinal du moule mâle (1, 2, 3, 4, 5, 6) associé et étant installée sur une plaque fixe (17) ainsi que sur une plaque mobile (22),
- les broches (11, 12, 13, 14, 15, 16) pouvant être déplacées par la plaque mobile (22) et les moules mâles (1, 2, 3, 4, 5, 6) pouvant être déplacés par les broches (11, 12, 13, 14, 15, 16).

9. Dispositif (200) selon la revendication 8, **caractérisé en ce que** la plaque de base (8) comprend des premiers organes de serrage (9) avec lesquels les moules mâles (1, 2, 3, 4, 5, 6) peuvent être bloqués indépendamment les uns des autres sur la plaque de base (8) et/ou la plaque fixe (17) comprend des deuxièmes organes de serrage (18) avec lesquels les broches (11, 12, 13, 14, 15, 16) peuvent être bloquées indépendamment les unes des autres sur la plaque fixe (17) et/ou la plaque mobile (22) comprend des troisièmes organes de serrage (23) avec lesquels les broches (11, 12, 13, 14, 15, 16) peuvent être bloquées indépendamment les unes des autres sur la plaque mobile (22).

10. Dispositif (200) selon la revendication 9, **caractérisé en ce que** les premiers organes de serrage (9) et/ou les deuxièmes organes de serrage (18) et/ou les troisièmes organes de serrage (23) sont des organes de serrage magnétiques.

11. Dispositif (200) selon l'une quelconque des revendications 9 ou 10, **caractérisé en ce qu'**un déplacement des broches (11, 12, 13, 14, 15, 16) comporte un blocage des broches (11, 12, 13, 14, 15, 16) sur la plaque mobile (22) et/ou une fixation des broches (11, 12, 13, 14, 15, 16) comporte un blocage des broches (11, 12, 13, 14, 15, 16) sur la plaque fixe (17).

12. Dispositif (200) selon l'une quelconque des revendications 9 à 11, **caractérisé en ce que** les premiers organes de serrage (9) et/ou les deuxièmes organes de serrage (18) et/ou les troisièmes organes de serrage (23) comprennent un disque de serrage (25) ainsi qu'un vérin de serrage (24) qui peut être déplacé le long de l'axe longitudinal d'une première position (34) à une seconde position (35), le vérin de serrage (24) agissant à la première position (34) sur le disque de serrage (25) de sorte qu'un blocage des moules mâles (1, 2, 3, 4, 5, 6) et/ou des broches (11, 12, 13, 14, 15, 16) se produise et, dans la seconde position (35), le vérin de serrage (24) étant séparé du disque de serrage (25).

13. Dispositif selon l'une quelconque des revendications 9 à 12, **caractérisé en ce que** l'axe longitudinal est perpendiculaire à la plaque de base (8) et/ou l'axe longitudinal est perpendiculaire à la plaque fixe (17) et/ou la plaque mobile (22).
